# EUROPEAN PATENT APPLICATION

(11) **EP 3 985 066 A1**
(43) Date of publication of application: **20.04.2022**
(21) Application number: 21202321.2
(22) Date of filing: 13.10.2021
(51) Int. Cl.: C08L 23/14, C08F 210/06, C08F 2/00, H01B 3/44

(54) **POLYOLEFIN RESIN COMPOSITION FOR INSULATION WITH HIGH BREAKDOWN VOLTAGE AND ARTICLE MOLDED THEREFROM**

(30) Priority: 15.10.2020 KR 20200133080; 03.08.2021 KR 20210102025
(71) Applicant: Hanwha Total Petrochemical Co., Ltd., Seosan-si, Chungcheongnam-do 31900 (KR)
(72) Inventor: LEE, Eunwoong, 31900 Chungcheongnam-do (KR); CHUN, YongSung, 31900 Chungcheongnam-do (KR); KIM, BongSeock, 31900 Chungcheongnam-do (KR)
(74) Representative: dompatent von Kreisler Selting Werner - Partnerschaft von Patent- und Rechtsanwälten mbB

(57) **Abstract**

The present invention relates to a polyolefin resin composition suitable for use in power cables by virtue of excellent insulation characteristics and to an article molded therefrom. The polyolefin resin composition according to an embodiment of the present invention is excellent in thermal resistance, breakdown voltage, DC insulation, and mechanical properties. Accordingly, the polyolefin resin article prepared therefrom can be advantageously used as an insulation layer of a power cable.

## Description

### Technical Field

The present invention relates to a polyolefin resin composition suitable for use in power cables by virtue of excellent insulation characteristics and to an article molded therefrom. Specifically, the present invention relates to a polyolefin resin composition, which is excellent in thermal resistance, breakdown voltage, direct-current (DC) insulation, and mechanical properties, and to an article molded therefrom.

### Background Art of the Invention

In general, polypropylene resins are widely used in the products that require insulation characteristics at high voltages and high thermal resistance at the same time, such as packaging of major parts of electronic products, housings of electrical parts for automobiles, protection of major parts of electrical products, and surfaces of small heaters, by virtue of their excellent rigidity, high thermal resistance, high resistance to chemicals, and high insulation characteristics.

However, since polypropylene resins have high rigidity and stress whitening takes place when they are bent, it is difficult to be applied to curved parts. Since they are vulnerable to external impacts and are easily broken at low temperatures, it is difficult to install and use them in an outdoor environment or where a lot of bends exist.

Thus, polyethylene, an ethylene-propylene rubber copolymer (EPR), an ethylene-propylene-diene rubber copolymer (EPDM), or the like is used as crosslinked as a material for insulation layers of power cables used in such an environment.

However, in the case of crosslinked polyethylene, EPR, or EPDM, it cannot be recycled when the lifespan of the product has expired or a defect occurs. It is not environmentally friendly since it has to be incinerated.

Meanwhile, high-density polyethylene (HDPE), linear low-density polyethylene (LLDPE), and low-density polyethylene (LDPE) in a non-crosslinked form can be recycled. But they have low thermal resistance, whereby they are deformed and melted at high temperatures, making it difficult to be used for high-voltage cables operated at high temperatures.

In order to compensate for the shortcomings of polypropylene resins and to compensate for the properties for operation at high temperatures and impact resistance, attempts have been made to develop a polyolefin composition to be used as an insulator in which polypropylene is blended with polyolefin elastomer (POE), EPDM, styreneethylene-butene-styrene rubber (SEBS).

However, POE, EPDM, and SEBS, which are amorphous polymers, have low thermal resistance and dielectric properties, unlike polypropylene, which is a crystalline polymer, so that the insulation properties of a polyolefin composition in which the former is blended are steeply reduced.

In order to improve this shortcoming, Korean Laid-open Patent Publication No. 10-2014-0053204 discloses a power cable in which a polypropylene resin to which an organic nucleating agent has been added is used as an insulation layer. However, the nucleating agent increases the rigidity of the polypropylene resin composition, resulting in a significant decrease in the softness.

In addition, Korean Patent Nos. 10-2121072, 10-2141732, 10-2082674, 10-2082673, and 10-1946945 disclose an insulation material with improved softness and impact resistance as well as thermal resistance, chemical resistance, and breakdown voltage of polypropylene by way of using a resin in which polypropylene is mixed with SEBS, Catalloy, POE, or the like. However, this resin composition is vulnerable to phase separation, which forms an interface between the polypropylene and the rubber, resulting in a deterioration in the electrical insulation characteristics or thermal resistance characteristics.

According to Hosier et al., J. Mater. Sci., 46, 4058 (2011), copolymers such as EPR, POE, EPDM, and SEBS have high dielectric constants, so that a polyolefin resin composition blended therewith is not effective as an insulator due to an increased dielectric constant and a reduced breakdown voltage. It is not suitable for use at high temperatures due to the characteristics of the rubber copolymer that the breakdown voltage steeply decreases as the temperature increases.

Meanwhile, in a crosslinked polymer or polypropylene, the crosslinking residues or catalyst residues may be charged by an external voltage to increase the electric field applied to the insulator. As a result, the dielectric breakdown strength is lowered, so that it is not suitable for use as a DC insulator. In order to improve this, an organic or inorganic filler is used as an additional additive or voltage stabilizer. However, it acts as heterocharges at high DC voltages, which accumulate space charges and make electric field distortion, thereby causing sudden break from polarity reversal.

In order to improve this, in Korean Laid-open Patent Publication No. 10-2008-007653, it has been attempted to improve the dielectric breakdown strength by adding a modified polyethylene resin containing a carboxyl group to a linear low-density polyethylene resin to form a DC insulator. In International Publication No. 2013/030206, it has been attempted to improve the DC insulation characteristics of a polypropylene resin with a nano-sized catalyst system. In addition, Korean Laid-open Patent Publication No. 2011-0110928 discloses a method of preparing an insulation material that has excellent volume resistivity and dielectric breakdown strength by mixing a polyethylene or polypropylene insulation resin with nano-sized inorganic particles (e.g., magnesium oxide, carbon, silicon oxide, titanium dioxide, and the like). However, this method has a disadvantage in that it is difficult to uniformly disperse the nano-sized particles in the polyolefin.

### Disclosure of the Invention

### Technical Problem to be Solved

In order to solve the above problems, an object of the present invention is to provide a polyolefin resin composition, which is excellent in thermal resistance, breakdown voltage, DC insulation, and mechanical properties.

Another object of the present invention is to provide an article prepared from the polyolefin resin composition.

### Solution to the Problem

According to an embodiment of the present invention to achieve the above object, there is provided a polyolefin resin composition, which comprises (A) 50 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 50% by weight of an ethylene-α-olefin rubber copolymer, based on the total weight of components (A) and (B), wherein the content of each metallic catalyst residue in the ethylene-propylene block copolymer (A) is 5 ppm or less, the total content of metallic catalyst residues in the ethylene-propylene block copolymer (A) is 50 ppm or less, the melting temperature (Tm) of the polyolefin resin composition is 150°C or higher, and the difference (Tm - Tc) between the melting temperature and the crystallization temperature (Tc) of the polyolefin resin composition is 45°C or less.

In a specific embodiment of the present invention, the metallic catalyst residue may comprise at least one selected from the group consisting of Mg, Ti, Si, and Al.

In a specific embodiment of the present invention, the glass transition temperature of the rubber component in the ethylene-propylene block copolymer (A) appears at -60 to -40°C when measured by a dynamic mechanical analyzer.

In a specific embodiment of the present invention, the α-olefin in the ethylene-α-olefin rubber copolymer (B) may have 3 to 8 carbon atoms. Specifically, the ethylene-α-olefin rubber copolymer (B) may comprise at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber. Preferably, the ethylene-α-olefin rubber copolymer (B) may be an ethylene-propylene rubber.

In a specific embodiment of the present invention, the content of α-olefin in the ethylene-α-olefin rubber copolymer (B) may be 10 to 90% by weight.

In a specific embodiment of the present invention, the polyolefin resin composition may have a melting temperature (Tm) of 150 to 165°C.

In a specific embodiment of the present invention, the glass transition temperature of the rubber component in the polyolefin resin composition appears at -60 to -40°C when measured by a dynamic mechanical analyzer.

The polyolefin resin composition according to an embodiment of the present invention may further comprise at least one additive selected from the group consisting of an antioxidant, a neutralizer, a UV stabilizer, a long-term thermal stabilizer, a slip agent, an anti-blocking agent, a weathering stabilizer, an antistatic agent, a lubricant, a nucleating agent, a flame retardant, a pigment, and a dye.

Here, the additive may be added in an amount of 1.0 part by weight or less based on 100 parts by weight of the polyolefin resin composition.

According to another embodiment of the present invention, there is provided a polyolefin resin article molded from the polyolefin resin composition.

In a specific embodiment of the present invention, the polyolefin resin article may have a flexural modulus of 600 MPa or less and a brittleness temperature of -40°C or lower.

In a specific embodiment of the present invention, the polyolefin resin article may have a volume resistance of 10¹⁶ Ωcm or more when measured at room temperature.

In a specific embodiment of the present invention, the polyolefin resin molded article has suppressed space charge accumulation characteristics measured by the PEA (pulse electro acoustic) method at room temperature to 60°C.

In a specific embodiment of the present invention, the polyolefin resin article may be an insulation layer of a power cable.

### Advantageous Effects of the Invention

The polyolefin resin composition according to an embodiment of the present invention is excellent in thermal resistance, breakdown voltage, DC insulation, and mechanical properties, has no space charges due to hetero-charges, and does not require crosslinking, which makes it recyclable and thus environmentally friendly. Accordingly, the polyolefin resin article prepared therefrom can be advantageously used as an insulation layer of a power cable.

### Brief Description of the Drawing

Fig. 1 shows the accumulation state of space charges in a commercial product of crosslinked polyethylene (XLPE), the composition of Comparative Example 1, and the composition of Example 1.
Fig. 2 is a graph showing the dielectric breakdown strength with respect to temperature of the commercial product of crosslinked polyethylene, the composition of Comparative Example 1, and the composition of Example 1.

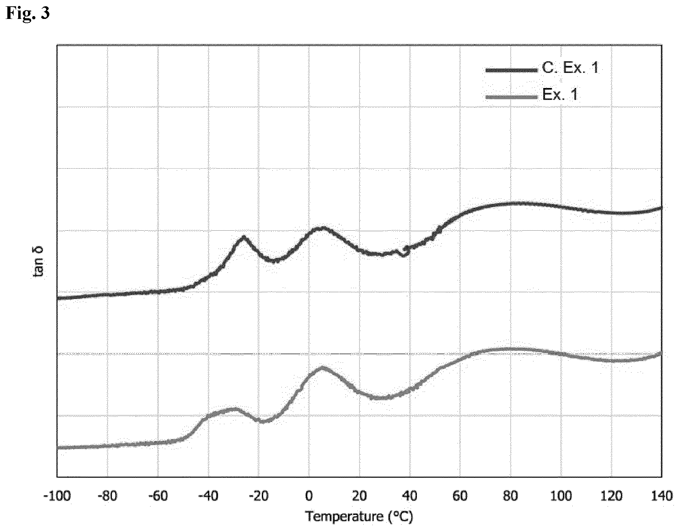

Fig. 3 is a graph showing the measurement of the glass transition temperature of the resin compositions of Example 1 and of Comparative Example 2.

### Detailed Description for Carrying out the Invention

Hereinafter, the present invention will be described in more detail.

### Polyolefin resin composition

The polyolefin resin composition according to an embodiment of the present invention comprises (A) 50 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 50% by weight of an ethylene-α-olefin rubber copolymer, based on the total weight of components (A) and (B).

### (A) Ethylene-propylene block copolymer

The polyolefin resin composition according to an embodiment of the present invention comprises an ethylene-propylene block copolymer (A). Here, the ethylene-propylene block copolymer (A) is obtained by polymerization of a propylene homopolymer or an ethylene-propylene random copolymer with an ethylene-propylene rubber copolymer in stages in reactors.

In a specific embodiment of the present invention, a polypropylene-based matrix of a propylene homopolymer or an ethylene-propylene random copolymer is first polymerized, followed by block copolymerization of an ethylene-propylene rubber component to the polypropylene-based matrix, whereby an ethylene-propylene block copolymer (A) resin may be prepared.

In a specific embodiment of the present invention, the ethylene-propylene block copolymer (A) has a content of each metallic catalyst residue of 5 ppm or less and a total content of metallic catalyst residues of 50 ppm or less, preferably 30 ppm or less. If the total content of the metallic catalyst residues exceeds 50 ppm, the insulation capability of a molded article is lowered by the metallic components, which reduces the dielectric breakdown strength, and the dielectric properties are increased to impair the insulation performance.

In a specific embodiment of the present invention, the metallic catalyst residue may be derived from the catalyst used for the polymerization of the ethylene-propylene block copolymer (A). Thus, the above metallic catalyst residue may be any one as long as it originates from a catalyst used for the polymerization of a polypropylene-based resin. Specifically, the metallic catalyst residue may comprise at least one selected from the group consisting of Mg, Ti, Si, and Al.

In a specific embodiment of the present invention, the glass transition temperature (Tg) of the rubber component in the ethylene-propylene block copolymer (A) may clearly appear at -60 to -40°C when measured by a dynamic mechanical analyzer (DMA). In such a case, the low-temperature impact strength of the polyolefin resin composition measured by Izod may be 2 kgf· cm/cm or more.

The polyolefin resin composition according to an embodiment of the present invention comprises 50 to 100% by weight of the ethylene-propylene block copolymer (A) based on the total weight of components (A) and (B). If the content of the ethylene-propylene block copolymer (A) is less than 50% by weight, the thermal resistance of a molded article would be reduced, and the heat deformation would be aggravated, so that the deformation of appearance may be aggravated in the operation at high temperatures.

There is no particular limitation to the method of preparing the ethylene-propylene block copolymer (A). Any method of preparing an ethylene-propylene block copolymer known in the art to which the present invention pertains may be used as it is or appropriately modified.

Preferably, the ethylene-propylene block copolymer resin may be prepared by a polymerization method known to those skilled in the art using Mitsui's Hypol process in which two bulk reactors and one gas-phase reactor are connected in series, and polymerization is continuously carried out therein.

Specifically, in the first- and second-stage reactors, propylene alone is injected to produce a propylene homopolymer, or ethylene is additionally injected thereto to produce an ethylene-propylene random copolymer. In the case of polymerization of the ethylene-propylene random copolymer, the same amount of ethylene may be copolymerized in each polymerization reactor. In the ensuing third-stage reactor, ethylene and propylene may be injected to block-polymerize an ethylene-propylene rubber component, thereby obtaining the final ethylene-propylene block copolymer. The melt index of the resulting copolymer can be controlled by injecting hydrogen into each reactor.

In a specific embodiment of the present invention, the catalyst may be prepared by reacting a titanium compound with an internal electron donor on a magnesium chloride or dialkoxy magnesium carrier. For example, a Ziegler-Natta catalyst may be composed of a carrier made of dialkoxymagnesium particles obtained by reacting metallic magnesium and an alcohol in the presence of a halogen compound or a nitrogen halogen compound as a reaction initiator, titanium tetrachloride, and an internal electron donor.

Here, the form of the metallic magnesium particles used for the preparation of the dialkoxymagnesium carrier is not particularly limited. However, a powder form having an average particle diameter of 10 to 300 µm is preferable, and a powder form having an average particle diameter of 50 to 200 µm is more preferable. If the average particle diameter of the metallic magnesium is less than 10 µm, the average particle size of the carrier as a product becomes too fine, which is not preferable. If the average particle diameter of the metallic magnesium exceeds 300 µm, the average particle size of the carrier becomes too large, and it is difficult to form a uniform spherical shape of the carrier, which is not preferable.

It is preferable to use the catalyst thus obtained with an organoaluminum compound (e.g., triethylaluminum) as a co-catalyst and a dialkyldialkoxysilane-based compound (e.g., dicyclopentyldimethoxysilane) as an external electron donor.

### (B) Ethylene-α-olefin rubber copolymer

The polyolefin resin composition according to an embodiment of the present invention may comprise an ethylene-α-olefin rubber copolymer (B). The ethylene-α-olefin rubber copolymer (B) may serve to improve the softness of a molded article.

In a specific embodiment of the present invention, the α-olefin in the ethylene-α-olefin rubber copolymer (B) may have 3 to 8 carbon atoms. Specifically, the ethylene-α-olefin rubber copolymer (B) may comprise at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber. Preferably, the ethylene-α-olefin rubber copolymer (B) may be an ethylene-propylene rubber.

In a specific embodiment of the present invention, the content of α-olefin in the ethylene-α-olefin rubber copolymer (B) may be 10 to 90% by weight. Specifically, the content of α-olefin is 10 to 90% by weight when the ethylene-α-olefin rubber copolymer (B) is measured by a Fourier transform infrared spectrometer. If the content of α-olefin is less than 10% by weight, phase separation from the polypropylene matrix would take place since the ethylene content is excessive, resulting in a decrease in the softness and mechanical properties of the molded article, and electrical passages would be formed along the interface to deteriorate the insulation properties. If the content of α-olefin exceeds 90% by weight, the glass transition temperature of the resin composition would be high, and the low-temperature impact strength of a molded article at -40°C would be deteriorated.

The polyolefin resin composition according to an embodiment of the present invention may comprise 0 to 50% by weight of the ethylene-α-olefin rubber copolymer (B) based on the total weight of components (A) and (B). If the ethylene-α-olefin rubber copolymer (B) is added, the softness is improved. If it exceeds 50% by weight, however, the thermal resistance characteristics would be steeply deteriorated.

The ethylene-α-olefin rubber copolymer (B) may be polymerized by additionally feeding ethylene and an olefin monomer in the presence of the ethylene-propylene block copolymer (A) in the fourth-stage gas-phase reactor following the Hypol process described above.

In another method, a commercially available ethylene-α-olefin rubber copolymer (B) may be blended with the ethylene-propylene block copolymer (A) obtained in the Hypol process, thereby preparing the polyolefin resin composition of the present invention. Examples of the ethylene-α-olefin rubber copolymer (B) commercially available include Versify (Dow), Vistamaxx (ExxonMobil), Tafmer (Mitsui), KEP (Kumho Petrochemical), Engage (Dow), Exact (ExxonMobil), Lucene (LG Chemical), and Solumer (SK Chemical), but it is not particularly limited thereto.

### (C) Non-polar α-olefin polymer

The polyolefin resin composition according to an embodiment of the present invention may further comprise a non-polar α-olefin polymer (C). The non-polar α-olefin polymer (C) serves to maintain the dielectric constant and breakdown voltage characteristics while preventing an increase in the flexural modulus of a molded article.

In a specific embodiment of the present invention, the non-polar α-olefin polymer (C) may comprise at least one selected from the group consisting of low-density polyethylene, linear low-density polyethylene, high-density polyethylene, and a terpolymer of ethylene and α-olefin, but it is not particularly limited thereto.

The polyolefin resin composition according to an embodiment of the present invention may further comprise 10 parts by weight or less of the non-polar α-olefin polymer (C) based on 100 parts by weight of components (A) and (B). If the content of the non-polar α-olefin polymer (C) exceeds 10 parts by weight, an interface with the polyolefin resin composition would be formed to impair the breakdown voltage characteristics, and the flexural modulus would become too high, so that it is difficult to secure the softness as a material for power cables.

There is no particular limitation to the method for preparing the polyolefin resin composite according to an embodiment of the present invention. Any blending method known in the technical field of the present invention may be used as it is or appropriately modified.

As a specific example, the resins described above and the additives described below are supplied to a mixer such as a kneader, a roll, and a Banbury mixer, or a single- or twinscrew extruder in predetermined amounts, and they are then blended using this apparatus, thereby preparing the polyolefin resin composition of the present invention.

In a specific embodiment of the present invention, the polyolefin resin composition has a melting temperature (Tm) of 150°C or higher. Preferably, the polyolefin resin composition may have a melting temperature (Tm) of 150 to 165°C. If the melting temperature is lower than 150°C, the thermal resistance of the polyolefin resin composition is not sufficient. Thus, it is not suitable for a high-voltage electric power cable operated at high temperatures.

In a specific embodiment of the present invention, the polyolefin resin composition has a difference (Tm - Tc) between the melting temperature and the crystallization temperature (Tc) of 45°C or less. If the difference between the melting temperature and the crystallization temperature exceeds 45°C, the number of nuclei would be small and the crystal growth would be slow when the polyolefin resin composition in the molten state is cooled and crystallized for molding a product, whereby the size of spherulite increases, resulting in a deterioration in the electrical properties of a molded article.

In a specific embodiment of the present invention, the polyolefin resin composition may have a melt index of 0.5 to 10 g/10 min when measured at 230°C under a load of 2.16 kg according to ASTM D1238. If the melt index of the polyolefin resin composition is less than 0.5 g/10 minutes, it is not suitable for an extrusion process. If it exceeds 10 g/10 minutes, the molecular weight is too small, thereby impairing the breakdown voltage characteristics of a molded article.

In a specific embodiment of the present invention, when the polyolefin resin composition is extracted at room temperature with a xylene solvent, the content of the rubber component (i.e., solvent extract) thus extracted may be 25 to 50% by weight, preferably 30 to 45% by weight. If the content of the rubber component is less than 25% by weight, the strength of a molded article would be high and the flexibility would be low. If the content of the rubber component exceeds 50% by weight, the heat deformation rate of a molded article would be high, and the tensile and elongation strength would be low. Thus, it is deteriorated in terms of thermal resistance and processability.

In a specific embodiment of the present invention, the rubber component in the polyolefin resin composition extracted by a xylene solvent may have an intrinsic viscosity of 2.0 to 4.0 dl/g when measured in a decalin solvent at 135°C. If the intrinsic viscosity is less than 2.0 dl/g, the impact strength of a molded article would not be good. If it exceeds 4.0 dl/g, the rubber component may agglomerate, and the area of the interface is reduced, so that space charges may be readily accumulated.

In a specific embodiment of the present invention, the glass transition temperature (Tg) of the rubber component in the polyolefin resin composition may clearly appear at - 60 to -40°C when measured by a dynamic mechanical analyzer (DMA). In such a case, the low-temperature impact strength of the polyolefin resin composition measured by Izod may be 2 kgf· cm/cm or more.

The polyolefin resin composition according to an embodiment of the present invention may further comprise conventional additives within a range that does not depart from the scope of the present invention. For example, the polyolefin resin composition according to an embodiment of the present invention may further comprise at least one additive selected from the group consisting of an antioxidant, a neutralizer, a UV stabilizer, a long-term thermal stabilizer, a slip agent, an anti-blocking agent, a weathering stabilizer, an antistatic agent, a lubricant, a nucleating agent, a flame retardant, a pigment, and a dye, but it is not particularly limited thereto.

In a specific embodiment of the present invention, the polyolefin resin composition may comprise an antioxidant to increase the thermal stability thereof.

Here, examples of the antioxidant include a phenolic antioxidant, a phosphite antioxidant, or the like. Specifically, it may comprise at least one selected from the group consisting of tetrakis(methylene(3,5-di-t-butyl-4-hydroxy)hydrosilylnate), pentaerythritol tetrakis(3-(3,5-di-t-butyl-4-hydroxyphenyl)propionate), 1,3,5-trimethyl-tris(3,5-di-t-butyl-4-hydroxybenzyl)benzene, and tris(2,4-di-t-butylphenyl)phosphite, but it is not particularly limited thereto.

In a specific embodiment of the present invention, the polyolefin resin composition may comprise hydrotalcite, calcium stearate, or the like as a neutralizer for removing the catalyst residues, it is not limited thereto.

In a specific embodiment of the present invention, the additive may be added in an amount of 1.0 part by weight or less based on 100 parts by weight of the polyolefin resin composition.

### Molded Article

According to another embodiment of the present invention, there is provided a polyolefin resin article molded from the polyolefin resin composition.

There is no particular limitation to the method for preparing a molded article from the polyolefin resin composition according to an embodiment of the present invention. Any method known in the technical field of the present invention may be used. For example, the polyolefin resin composition according to an embodiment of the present invention may be molded by a conventional method such as injection molding, extrusion molding, casting molding, or the like to prepare a molded article of a polyolefin resin.

The polyolefin resin article according to an embodiment of the present invention may have a flexural modulus of 600 MPa or less, preferably 550 MPa or less, more preferably 500 MPa or less.

In addition, the polyolefin resin article according to an embodiment of the present invention may have a brittleness temperature of -40°C or lower.

Accordingly, in a specific embodiment of the present invention, the polyolefin resin article may have a flexural modulus of 600 MPa or less and a brittleness temperature of - 40°C or lower.

In a specific embodiment of the present invention, the polyolefin resin article may have a volume resistance of 10¹⁶ Ωcm or more when measured at room temperature. If the volume resistivity is within the above range, the molded article may serve as an insulator.

In a specific embodiment of the present invention, the polyolefin resin molded article has no accumulation of hetero-space charge in the space charge characteristics measured by the PEA (pulse electro acoustic) method at room temperature to 60°C.

In a specific embodiment of the present invention, the polyolefin resin article may be an insulation layer of a power cable.

### Example

Hereinafter, the present invention is explained in detail by the following examples. However, the following examples are intended to further illustrate the present invention. The scope of the present invention is not limited thereto only.

### Preparation of a catalyst

A 5-liter glass reactor equipped with a stirrer, an oil heater, and a cooling reflux condenser was purged with nitrogen. It was then charged with 1.65 g of N-chlorosuccinimide, 15 g of metallic magnesium (a powder product having an average particle size of 100 µm), and 240 ml of anhydrous ethanol. While the stirring speed was maintained at 240 rpm, the temperature of the reactor was raised to 78°C to maintain the reflux of ethanol. After about 5 minutes, the reaction began to generate hydrogen. The outlet of the reactor was left open so that the generated hydrogen could be discharged, and the pressure in the reactor was maintained at atmospheric pressure.

Upon completion of the generation of hydrogen, 15 g of metallic magnesium (a powder product having an average particle diameter of 100 µm) and 240 ml of ethanol were divided into three portions and added every 20 minutes. Upon completion of the addition of metallic magnesium and ethanol, the reactor temperature and stirring speed were maintained at the reflux state for 2 hours (aging treatment).

Upon completion of the aging treatment, the resultant was washed 3 times at 50°C using 2,000 ml of normal hexane per washing. The washed resultant was dried under flowing nitrogen for 24 hours to obtain 270 g (yield: 96%) of diethoxymagnesium as a white solid product in a powder form with good flowability. The prepared diethoxymagnesium had a spherical shape with an average particle diameter of 37 µm, a particle size distribution index of 0.78, and a bulk density of 0.32 g/ml.

A 1-liter glass reactor equipped with a stirrer and sufficiently purged with nitrogen was charged with 150 ml of toluene and 25 g of diethoxymagnesium prepared above and maintained at 10°C. 25 ml of titanium tetrachloride was diluted in 50 ml of toluene, which was added thereto over 1 hour. The temperature of the reactor was then raised to 60°C at a rate of 0.5°C per minute. The reaction mixture was maintained at 60°C for 1 hour. Then, the stirring was stopped, and the supernatant was removed by waiting for the solid product to precipitate. It was stirred for 15 minutes using 200 ml of fresh toluene and then left still to remove the supernatant, thereby washing it once.

150 ml of toluene was added to the solid product treated with titanium tetrachloride above. While it was stirred at 250 rpm at a temperature maintained at 30°C, 50 ml of titanium tetrachloride was added at a constant rate over 1 hour. Upon completion of the addition of titanium tetrachloride, 2.5 ml of diisobutyl phthalate was added, and the temperature of the reactor was raised to 110°C at a constant rate over 80 minutes (the temperature being raised at a rate of 1°C per minute). When the temperature of the reactor reached 40°C and 60°C during the temperature elevation procedure, 2.5 ml of diisobutyl phthalate was further added, respectively.

The reaction mixture was maintained at 110°C for 1 hour. Then, the temperature was lowered to 90°C, the stirring was stopped, and the supernatant was removed. It was stirred with 200 ml of additional toluene and then left still to remove the supernatant, thereby washing it once. Added thereto were 150 ml of toluene and 50 ml of titanium tetrachloride. The temperature was then raised to 110°C and maintained for 1 hour. The slurry mixture upon completion of the aging procedure was washed twice with 200 ml of toluene each time and 5 times with 200 ml of normal hexane each time at 40°C, thereby obtaining a light-yellow catalyst. It was dried in a flow of nitrogen for 18 hours to obtain a dry catalyst. The content of titanium therein was 2.70% by weight.

### Preparation of an ethylene-propylene block copolymer

The catalyst prepared above was used while triethyl aluminum as a co-catalyst and dicyclopentyl dimethoxysilane as an external electron donor were used. Mitsui's Hypol process, in which two bulk reactors and one gas-phase reactor were connected in series for continuous polymerization, was used for the polymerization of an ethylene-propylene block copolymer. Here, the operating temperatures and pressures of the bulk reactors as the first- and second-stage reactors were in the range of 68 to 75°C and 25 to 35 kg/cm², and 60 to 67°C and 25 to 30 kg/cm², respectively. The operating temperatures and pressures of the gas-phase reactors as the third-stage reactor were in the range of 75 to 82°C and 15 to 20 kg/cm². When a propylene homopolymer was polymerized in the first- and second-stage bulk reactors, hydrogen was injected into each reactor in addition to propylene to adjust the melt index. When an ethylene-propylene random copolymer was polymerized, the ratio of ethylene and propylene was adjusted such that the same amount of ethylene was copolymerized in each reactor.

In addition, a commercial product (LS4201 from Borealis) of crosslinked polyethylene (XLPE) was used for comparison.

### Example 1

An ethylene-propylene block copolymer (A), in which an ethylene-propylene rubber copolymer was polymerized to a propylene homopolymer, was prepared in the presence of the catalyst in the Hypol process as described above.

### Example 2

Polymerization was carried out in the same manner as in Example 1, except that 1% by weight and 1.8% by weight of ethylene were injected in the first- and second-stage reactors, respectively, to polymerize an ethylene-propylene random copolymer, and then an ethylene-propylene rubber copolymer was polymerized to prepare an ethylene-propylene block copolymer (A). In the polymerization of the ethylene-propylene random copolymer, the process conditions were controlled such that the same amount of ethylene was copolymerized in each polymerization reactor.

### Example 3

An ethylene-propylene block copolymer (A) was obtained in the same manner as in Example 1, and an ethylene-propylene rubber copolymer (B) (propylene content: 80% by weight, melt index: 3.0 g/10 minutes) was further melt-mixed therewith.

### Example 4

An ethylene-propylene block copolymer (A) was obtained in the same manner as in Example 1, and an ethylene-butene rubber copolymer (B) (butene content: 40% by weight, melt index: 1.0 g/10 minutes) was further melt-mixed therewith.

### Comparative Example 1

Polymerization was carried out in the same manner as in Example 1, except that a ZN118 catalyst of Lyondellbasell was used.

### Comparative Example 2

Polymerization was carried out in the same manner as in Comparative Example 1, except that 1% by weight and 1.8% by weight of ethylene were injected in the first- and second-stage reactors, respectively, to polymerize an ethylene-propylene random copolymer, and then an ethylene-propylene rubber copolymer was polymerized to prepare an ethylene-propylene block copolymer (A). In the polymerization of the ethylene-propylene random copolymer, the process conditions were controlled such that the same amount of ethylene was copolymerized in each polymerization reactor.

### Comparative Example 3

An ethylene-propylene block copolymer (A) was obtained in the same manner as in Comparative Example 1, and an ethylene-propylene rubber copolymer (B) (propylene content: 80% by weight, melt index: 3.0 g/10 minutes) was further melt-mixed therewith.

### Comparative Example 4

An ethylene-propylene block copolymer (A) was obtained in the same manner as in Comparative Example 1, and an ethylene-butene rubber copolymer (B) (butene content: 40% by weight, melt index: 1.0 g/10 minutes) was further melt-mixed therewith.

### Test Example

The physical properties of the compositions and the molded article specimens prepared in Examples 1 to 3 and Comparative Examples 1 to 4 were measured according to the following methods and standards. The results are shown in Tables 1 and 2.

### (1) Melt index

The melt index was measured at 230°C under a load of 2.16 kg according to the ASTM D 1238 method.

### (2) Content of a solvent extract (or xylene soluble)

A resin composition was dissolved in xylene at a concentration of 1% at 140°C for 1 hour and left at room temperature for 2 hours for extraction. The weight of the extract was measured and expressed in percent based on the total weight of the resin composition.

### (3) Intrinsic viscosity of a solvent extract

The intrinsic viscosity of a solvent extract in Section (2) above was measured in a decalin solvent at 135°C using a viscometer.

### (4) Melting temperature

A sample was kept isothermal at 200°C for 10 minutes in a differential scanning calorimeter (DSC; Q2000, TA Instrument) to remove the thermal history and then cooled from 200°C to 30°C at a rate of 10°C per minute for crystallization thereof to impart the same thermal history. Then, the sample was kept isothermal at 30°C for 10 minutes, followed by heating the sample at a rate of 10°C per minute. The melting temperature (Tm) was obtained from the peak temperature.

### (5) Glass transition temperature

In a dynamic mechanical analyzer (DMA; TA Instrument Q800), the temperature was raised from -140°C to 145°C at a rate of 2°C/min, and the glass transition temperature (Tg) of the rubber component was determined from the stress relaxation curve.

### (6) Metallic catalyst residue

The content of the metallic substances remaining in a polypropylene-based resin was measured using X-ray fluorescence (XRF).

### (7) Flexural modulus (FM)

The flexural modulus was measured in accordance with the ASTM D 790 method. The size of the injection-molded specimen was 100 mm × 10 mm × 3 mm.

### (8) Direct current (DC) breakdown voltage

A polypropylene specimen was prepared in the form of a sheet having a thickness of 200 µm using an experimental extruder (HAAKE extruder). The direct current breakdown voltage was measured at room temperature using spherical electrodes having a diameter of 12.7 mm according to the ASTM D 149-92 method.

### (9) Alternating current (AC) breakdown voltage

A polypropylene specimen was prepared in the form of a sheet having a thickness of 200 µm using an experimental extruder (HAAKE extruder). The alternating current breakdown voltage was measured according to the ASTM D 149 standard.

### (10) Measurement of space charges

A sheet having a thickness of 200 µm was prepared using an experimental extruder (HAAKE extruder). The generation of space charges was observed by the PEA (pulse electro acoustic) method in which pulses were applied for 10 minutes at 20 kV/mm, 50 kV/mm, and 100 kV/mm at 30°C and 60°C, respectively.

### (11) Brittleness temperature test

A specimen injection-molded to a size of 38 mm × 6.0 mm × 2.0 mm was put in a medium maintained at -40°C in which ethanol and dry ice had been mixed. After 2 minutes, a blow was applied thereto to check whether the specimen was broken. According to KSC 3004:2002, a total of five specimens were tested. If two or more specimens were broken, it was a failure. If less than 2 specimens were broken, it was a pass.

**[Table 1]**

| | | Example | | | |
|---|---|---|---|---|---|
| | | 1 | 2 | 3 | 4 |
| Resin composition (wt. %) | (A) Ethylene-propylene block copolymer | 100 | 100 | 90 | 75 |
| | (B) Ethylene-α-olefin rubber copolymer | 0 | 0 | 10 | 25 |
| | Metallic catalyst residue (ppm) in resin (A) | | | | |
| | Ti | 1.1 | 0.8 | 0.8 | 0.8 |
| | Mg | 3.2 | 2.3 | 2.3 | 2.3 |
| | Al | 32.3 | 37.2 | 37.2 | 37.2 |
| | Si | 2.3 | 3.1 | 3.1 | 3.1 |
| | Total content | 38.9 | 43.4 | 43.4 | 43.4 |
| Physical properties of the resin composition | Melt index (g/10 min) | 2.0 | 1.9 | 2.2 | 1.8 |
| | Content of the solvent extract (wt. %) | 35 | 34 | 41 | 51 |
| | Intrinsic viscosity of the solvent extract (dl/g) | 3.0 | 3.2 | 2.7 | 3.2 |
| | Thermal characteristics | | | | |
| | Melting temp. (Tm; °C) | 163 | 153 | 151 | 152 |
| | Crystallization temp. (Tc; °C) | 125 | 110 | 109 | 113 |
| | Tm - Tc | 38 | 43 | 42 | 39 |
| Physical properties of the molded article | Flexural modulus (MPa) | 480 | 420 | 330 | 340 |
| | Brittleness temperature test (-40°C) | Pass | Pass | Pass | Pass |
| | AC breakdown voltage (kV/mm) | 121 | 110 | 107 | 105 |
| | DC breakdown voltage (kV/mm) | 311 | 289 | 261 | 247 |
| | Volume resistivity (Ωcm) | >10¹⁷ | >10¹⁷ | >10¹⁶ | >10¹⁶ |
| | Space charge accumulation | No | No | No | No |

**[Table 2]**

| | | Comparative Example | | | |
|---|---|---|---|---|---|
| | | 1 | 2 | 3 | 4 |
| Resin composition (wt. %) | (A) Ethylene-propylene block copolymer | 100 | 100 | 90 | 75 |
| | (B) Ethylene-α-olefin rubber copolvmer | 0 | 0 | 10 | 25 |
| | Metallic catalyst residue (ppm) in resin (A) | | | | |
| | Ti | 1.9 | 2.2 | 2.2 | 2.2 |
| | Mg | 16.4 | 8.4 | 8.4 | 8.4 |
| | Al | 96.2 | 43.2 | 43.2 | 43.2 |
| | Si | 23.1 | 5.1 | 5.1 | 5.1 |
| | Total content | 137.6 | 58.9 | 58.9 | 58.9 |
| Physical properties of the resin composition | Melt index (g/10 min) | 1.8 | 1.8 | 2.3 | 2.1 |
| | Content of the solvent extract (wt. %) | 32 | 33 | 40 | 48 |
| | Intrinsic viscosity of the solvent extract (dl/g) | 3.3 | 3.1 | 3.0 | 3.1 |
| | Thermal characteristics | | | | |
| | Melting temp. (Tm; °C) | 161 | 156 | 155 | 155 |
| | Crystallization temp. (Tc; °C) | 121 | 108 | 112 | 113 |
| | Tm - Tc | 40 | 48 | 43 | 42 |
| Physical properties of the molded article | Flexural modulus (MPa) | 490 | 430 | 350 | 320 |
| | Brittleness temperature test (-40°C) | Pass | Pass | Failure | Pass |
| | AC breakdown voltage (kV/mm) | 113 | 87 | 83 | 72 |
| | DC breakdown voltage (kV/mm) | 294 | 251 | 214 | 132 |
| | Volume resistivity (Ωcm) | >10¹⁶ | >10¹⁶ | >10¹⁵ | >10¹⁴ |
| | Space charge accumulation | Yes | Yes | Yes | Yes |

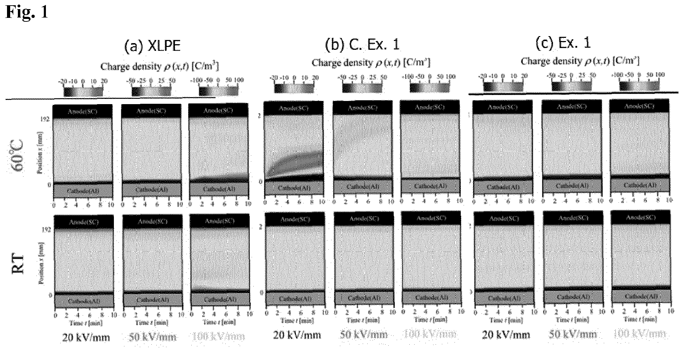

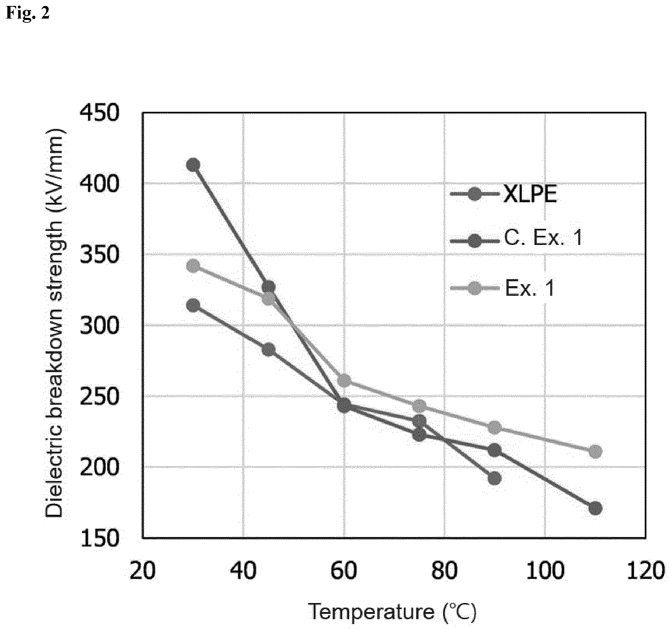

As can be seen from Tables 1 and 2 above and Figs. 1 and 2, the resin compositions of the Example, falling within the scope of the present invention, were excellent in all of such electrical properties as AC breakdown voltage, DC breakdown voltage, volume resistivity, and space charge accumulation.

In contrast, the resin composition of the Comparative Example had a high content of metallic catalyst residues in the ethylene-propylene block copolymer (A). Thus, space charges were accumulated. Space charges were accumulated in the crosslinked polyethylene (XLPE) as well.

In particular, the resin composition of Comparative Example 2 had a large difference between the melting temperature and the crystallization temperature. Thus, the size of spherulite was large, resulting in a low dielectric breakdown strength. In Comparative Examples 3 and 4 in which an ethylene-α-olefin (B) was melt-mixed, the electrical properties were deteriorated as compared with Examples 3 and 4.

The polyolefin resin composition according to an embodiment of the present invention is excellent in thermal resistance, breakdown voltage, DC insulation, and mechanical properties. Accordingly, the polyolefin resin article prepared therefrom can be advantageously used as an insulation layer of a power cable.

## Claims

1. A polyolefin resin composition, which comprises (A) 50 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 50% by weight of an ethylene-α-olefin rubber copolymer, based on the total weight of components (A) and (B), wherein the content of each metallic catalyst residue in the ethylene-propylene block copolymer (A) is 5 ppm or less, the total content of metallic catalyst residues is 50 ppm or less, the melting temperature (Tm) of the polyolefin resin composition is 150°C or higher, and the difference (Tm - Tc) between the melting temperature and the crystallization temperature (Tc) of the polyolefin resin composition is 45°C or less.

2. The polyolefin resin composition of claim 1, wherein the metallic catalyst residue comprises at least one selected from the group consisting of Mg, Ti, Si, and Al.

3. The polyolefin resin composition of claim 1 or 2, wherein the glass transition temperature of the rubber component in the ethylene-propylene block copolymer (A) appears at -60 to -40°C when measured by a dynamic mechanical analyzer.

4. The polyolefin resin composition of any one of claims 1 to 3, wherein the α-olefin in the ethylene-α-olefin rubber copolymer (B) has 3 to 8 carbon atoms.

5. The polyolefin resin composition of claim 4, wherein the ethylene-α-olefin rubber copolymer (B) comprises at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber.

6. The polyolefin resin composition of any one of claims 1 to 5, wherein the content of α-olefin in the ethylene-α-olefin rubber copolymer (B) is 10 to 90% by weight.

7. The polyolefin resin composition of any one of claims 1 to 6, which has a melting temperature (Tm) of 150 to 165°C.

8. The polyolefin resin composition of any one of claims 1 to 7, wherein the glass transition temperature of the rubber component in the polyolefin resin composition appears at -60 to -40°C when measured by a dynamic mechanical analyzer.

9. The polyolefin resin composition of any one of claims 1 to 8, which further comprises at least one additive selected from the group consisting of an antioxidant, a neutralizer, a UV stabilizer, a long-term thermal stabilizer, a slip agent, an anti-blocking agent, a weathering stabilizer, an antistatic agent, a lubricant, a nucleating agent, a flame retardant, a pigment, and a dye.

10. The polyolefin resin composition of claim 9, wherein the additive is added in an amount of 1.0 part by weight or less based on 100 parts by weight of the polyolefin resin composition.

11. A polyolefin resin article molded from the polyolefin resin composition according to any one of claims 1 to 10.

12. The polyolefin resin article of claim 11, which has a flexural modulus of 600 MPa or less and a brittleness temperature of -40°C or lower.

13. The polyolefin resin article of claim 11 or 12, which has a volume resistance of 10¹⁶ Ωcm or more when measured at room temperature.

14. The polyolefin resin article of any one of claims 11 to 13, which has no accumulation of hetero-space charge in the space charge characteristics measured by the PEA (pulse electro acoustic) method at room temperature to 60°C.

15. The polyolefin resin article of any one of claims 11 to 14, which is an insulation layer of a power cable.
